# FASCICULE DE BREVET EUROPEEN

(11) **EP 0 974 902 B1**
(45) Date de publication et mention de la délivrance du brevet: **04.06.2003**
(21) Numéro de dépôt: 98401853.1
(22) Date de dépôt: 21.07.1998
(51) Int. Cl.: G06F 11/10

(54) **Procédé de détection d'erreurs sur une liaison série d'un circuit intégré et dispositif de mise en oeuvre du procédé**
Verfahren um Fehler auf einer seriellen Verbindung einer integrierten Schaltung zu erkennen und Vorrichtung zur Durchführung des Verfahrens
Method of detecting errors on a serial link of an integrated circuit and device to realise this method

(43) Date de publication de la demande: 26.01.2000
(73) Titulaire: BULL S.A., 78434 Louveciennes Cedex (FR)
(72) Inventeur: Autechaud, Jean-François, 75004 Paris (FR); Dionet, Christophe, 94200 Ivry sur Seine (FR)

(56) Documents cités:
- GB-A- 2 097 563
- G.R. STEPHENS ET AL.: "FIBRE CHANNEL THE BASICS" 1995 , ANCOT CORPORATION , MENLO PARK, CALIFORNIA, USA XP002060314 * page 1-0 - page 1-14 * * page 6-0 - page 8-17 *
- C.J. GEORGIOU ET AL.: "SCALABLE PROTOCOL ENGINE FOR HIGH BANDWIDTH COMMUNICATIONS" 1997 IEEE INT. CONF. ON COMMUNICATIONS, vol. 2, 8 juin 1997, pages 1121-1126, XP002060851 MONTREAL, QUEBEC, CANADA
- RICHARD NASS: "Fibre Channel Transceiver Ups Bandwidth, Maintains Design Ease." ELECTRONIC DESIGN, vol. 45, no. 10, 12 mai 1997, pages 69-72, XP000698867 USA
- C.J. HOSSACK ET AL.: "Fully interconnected fault-tolerant networks using global link adapters." TRANSPUTER APPLICATIONS AND SYTEMS '94, 5 septembre 1994, pages 489-496, XP002060313 COMO, ITALY

## Description

La présente invention concerne un procédé de détection d'erreurs sur une liaison série d'un circuit intégré ainsi qu'un dispositif permettant la mise en oeuvre du procédé. L'invention concerne plus particulièrement un procédé et dispositif de détection d'erreurs sur une liaison série d'un circuit intégré, ou entre deux circuits intégrés, comportant un port parallèle série et série parallèle.

L'invention s'applique notamment lorsque l'on veut utiliser des liaisons séries gigabits ayant un taux d'erreur non nul, de l'ordre par exemple de 10⁻¹⁵ à 10⁻¹⁷, pour réaliser une liaison interne à un ensemble logique qui normalement est réalisé par une liaison parallèle qui n'est pas sujette aux perturbations. Cette substitution est motivée par le fait que les liaisons séries rapides présentent de nombreux avantages. Par exemple, les liaisons séries rapides ont une grande densité, une simplicité de connectique à bande passante identique et permettent une liaison longue, jusqu'à 10 mètres par exemple, ce qui est impossible avec des liaisons logiques internes standard.

Dans le cas où la liaison série est une liaison série à 1 Giga baud, et si l'on admet que deux ports de même type communiquent entre eux par la liaison série, et permettent à des machines, dont le taux d'erreurs est de l'ordre de 10⁻¹⁷ par corruption de messages et perte de calibration et/ou incohérence de protocole, de communiquer entre elles, on constate compte tenu du débit de la liaison série et du taux d'erreurs de la machine, que ce taux d'erreurs qui semble faible peut générer tous les deux jours une erreur importante et un dysfonctionnement de la machine.

Il est connu des circuits intégrés comportant des interfaces entre un bus parallèle et un bus série, mais en général ceux-ci ne comportent pas de dispositif et procédé de détection et recouvrement d'erreurs, car on part du principe que la communication ne comporte pas d'erreurs mettant en cause la liaison série, ou si celle-ci en comporte, les détections d'erreurs et recouvrement d'erreurs sont faites dans une couche plus élevée (perte de calibration) au niveau du logiciel (Software).

Il est connu dans l'art antérieur, par le document C.J. Georgiou et al.: "scalable protocol engine for high-bandwidth communications" 1997 IEEE Int. Conf. On Communications, vol. 2, 8 juin 1997, pages 1121-1126, XP002060851, Montreal, Quebec, Canada, un moteur de protocole de type "Fibre Channel". Un tel moteur, constituant un outil de communication adapté aux grandes vitesses d'échanges, ne prévoit absolument pas la détection des erreurs produites par la liaison série.

Un premier but de l'invention est donc de proposer un procédé permettant la détection d'erreurs et le contrôle du bon fonctionnement de la communication d'une liaison série.

Ce but est atteint par le fait que le procédé de détection d'erreurs sur un circuit intégré constituant un port de communication série parallèle haut débit entre un bus parallèle et une liaison série, le port comportant, dans une partie émission, au moins un tampon de données à transmettre et provenant du bus parallèle et, dans une partie réception, au moins un tampon de données à recevoir, la partie émission insérant chaque message ou ensemble de données dans un cadre de caractères de contrôle véhiculant des informations sur les messages concernés, la partie émission codant les caractères des messages au niveau des bits, la partie réception procédant à une vérification complète des messages, les tampons des parties émission et réception étant en nombre identique caractérisé en ce que les tampons des parties émission et réception sont utilisés de manière synchrone et cyclique, ladite vérification complète dans la partie réception (41) étant réalisée avant écriture du message dans le ou les tampons de réception (RDBUF), la partie réception comportant des moyens d'isolation des caractères des messages en débarrassant les messages des caractères de contrôle le procédé comportant:
- une étape de contrôle à la volée de la cohérence des messages au niveau de leur codage en bits,
- une étape de contrôle à la volée de la cohérence du flot de caractères constituant les messages,
- une étape de contrôle à la volée que les tampons des parties émission, et réception sont utilisés de manière synchrone et cyclique,
- une étape de contrôle à la volée des données des messages par calcul du code de contrôle redondant cyclique (CRC) sur toutes les données de chaque message à transmettre.

Selon une autre particularité la partie émission code les caractères des messages de façon à rechercher à avoir une composante continue nulle et en donnant à chaque caractère un bit de début et un bit de fin l'étape de contrôle à la volée de la cohérence des messages au niveau leur codage en bits étant réalisée par la partie réception et comportant :
- une étape de vérification que chaque caractère commence par un bit de début et se termine par un bit de fin
- une étape de vérification que le déséquilibre cumulé courant des codes du flot de messages reste cantonné dans une fourchette de valeurs déterminée.

Selon une autre particularité les messages ou données sont constitués de caractères dits normaux, des caractères de contrôle comportant des caractères nuls ou messages neutres, des caractères de début de cadre contenant des informations sur le format des messages contenus dans les cadres concernés tels que la longueur et/ou le type du message, des caractères de fin de cadre contenant des informations sur la validité des messages contenus dans les cadres concernés et sur l'identité du buffer source du message et des caractères de contrôle de flux associés chacun à un tampon de réception respectif et destinés à indiquer la disponibilité du tampon concerné, l'étape de contrôle à la volée de la cohérence du flux de caractères constituant les messages détectant les transformations, suite à des perturbations, de caractères normaux en caractère de contrôle et inversement, les transformations de caractères normaux en autres caractères normaux étant détectés par le CRC, ou ultérieurement par une erreur de déséquilibre cumulé courant.

Selon une autre particularité l'étape de contrôle à la volée que les tampons des parties émission et réception sont toujours utilisés de manière synchrone et cyclique comporte:
- une étape de vérification par la partie réception que l'identification ou numéro du tampon d'émission du message en cours correspond à l'identification ou numéro du tampon de réception associé, c'est à dire que le pointeur de sortie du tampon d'émission correspond au pointeur d'entrée du tampon de réception,
- une étape de génération d'un jeton indiquant qu'un tampon de réception a été vidé et que ce dernier est désormais libre,
- une étape de contrôle que les jetons générés lors des libérations des tampons de réception sont générés de manière cyclique.

Selon une autre particularité le procédé comporte
- une étape de vérification que le tampon de réception destiné à recevoir le message en cours est libre, un message n'étant émis vers la partie réception que si la place nécessaire y est disponible.

Selon une autre particularité, à l'initialisation de la liaison série tous les tampons de réception sont vides et les pointeurs d'entrée et de sortie des tampons d'émission et de réception sont à zéro.

Selon une autre particularité les informations transmises sont codées en 9/12 en associant au caractère normal formé d'un nonet le code dont la balance par rapport à la composante continue est choisie pour faire tendre le déséquilibre cumulé vers zéro, un bit de codage direct/inverse et, en complétant à 12 bits par un caractère de start et un caractère de stop.

Selon une autre particularité la fourchette dans laquelle doit rester cantonné le déséquilibre cumulé courant des codes du flot de messages est [+10; -10].

Un autre but de l'invention est donc de proposer un dispositif permettant la mise en oeuvre du procédé.

Ce but est atteint par le fait que le dispositif de détection d'erreurs sur un circuit intégré comportant une fonction de commande de liaison série pour constituer un port de communication série parallèle haut débit entre un bus parallèle et une liaison série, le port comportant, dans une partie émission, au moins un tampon de données à transmettre provenant du bus parallèle et des moyens de sérialisation en sortie, et, dans une partie réception, au moins un tampon de données à recevoir et des moyens de désérialisation en entrée et des moyens de contrôle des données des messages par calcul du code de contrôle redondant cyclique (CRC) sur toutes les données de chaque message à transmettre les parties émission et réception ayant le même nombre de tampons, caractérisé en ce que , la partie émission comporte des moyens d'insertion de chaque message ou ensemble de données dans une trame de caractères de contrôle véhiculant des informations sur les messages concernés, des moyens de codage des caractères, la partie réception comporte des moyens d'isolation des caractères des messages en débarrassant les messages des caractères de contrôle et des moyens de vérification complète des messages avant écriture de ces derniers dans le ou les tampons de réception, les partie émission et réception ayant le même nombre de tampons, les tampons étant utilisés de manière synchrone et cyclique, le dispositif comportant des moyens de contrôle à la volée de la cohérence des messages au niveau leur codage en bits, des moyens de contrôle à la volée de la cohérence du flot de caractères constituant les messages, et des moyens de contrôle à la volée que les tampons des parties émission, et réception sont utilisés de manière synchrone et cyclique.

Selon une autre particularité les moyens de codage des caractères assurent un codage en bits des caractères des messages de façon à avoir une composante continue nulle et donnent à chaque caractère un bit de début et un bit de fin, les moyens de contrôle à la volée de la cohérence des messages au niveau leur codage en bits contrôlant que chaque caractère commence par un bit de début et se termine par un bit de fin et que le déséquilibre cumulé courant des codes du flot de messages reste cantonné dans une fourchette déterminée.

Selon une autre particularité les messages ou données sont constitués de caractère dits "normaux"; les caractères de contrôle comportant, des caractères nuls ou messages neutres des caractères de début de cadre contenant des informations sur le format des messages contenus dans les cadres concernés tels que la longueur et/ou le type du message, des caractères de fin de cadre contenant des informations sur la validité des messages contenus dans les cadres concernés et sur l'identité du buffer source des messages, les caractères de contrôle comportant également des caractères de contrôle de flux associés chacun à un tampon de réception respectif et destinés à indiquer la disponibilité du tampon concerné, l'étape de contrôle à la volée de la cohérence du flot de caractères constituant les messages détectant les transformations, suite à des perturbations, de caractères normaux en caractère de contrôle et inversement, les transformations de caractères normaux en autres caractères normaux étant détectés par le CRC.

Selon une autre particularité les moyens de contrôle que les tampons des parties émission et réception qui sont utilisés de manière synchrone et cyclique, comportent des moyens de vérification que l'identification ou numéro du tampon d'émission du message en cours correspond à l'identification ou numéro du tampon de réception associé, des moyens de génération d'un jeton indiquant qu'un tampon de réception a été vidé et que ce dernier est désormais libre, et des moyens de contrôle que les jetons générés lors des libérations des tampons de réception sont générés de manière cyclique.

Selon une autre particularité le dispositif de détection d'erreurs comporte des moyens de vérification que le tampon de réception destiné à recevoir le message en cours est libre, un message n'étant émis vers la partie réception que si la place nécessaire y est disponible.

Selon une autre particularité le dispositif de détection d'erreurs comporte des moyens de comptage du nombre de tampons de réception libres, et des moyens de leur identification.

Selon une autre particularité le dispositif de détection d'erreurs comporte des moyens assurant la vidange des tampons de réception et mettant à zéro les pointeurs d'entrée et de sortie des tampons d'émission et de réception à l'initialisation de la liaison série.

Selon une autre particularité le dispositif de détection d'erreurs comporte deux tampons de données à transmettre et deux tampons de données à recevoir.

Selon une autre particularité la liaison série fonctionne sur un mode continu, des caractères nuls ou messages neutres étant disposés dans le flot continu entre les caractères ou messages ayant une signification.

Selon une autre particularité les messages sont des requêtes ou des réponses à des requêtes.

D'autres particularités et avantages de la présente invention apparaîtront plus clairement à la lecture de la description ci-après faite en référence aux dessins annexés illustratifs d'un mode non limitatif de réalisation de l'invention dans lesquels ;
- la figure 1 représente la partie un circuit intégré constituant un port d'interface série parallèle selon l'invention,
- la figure 2A représente le schéma général d'un circuit intégré incorporant un tel port d'interface,
- la figure 2B représente le schéma d'architecture d'une machine utilisant le circuit intégré de la figure 2A,
- la figure 3 représente un schéma simplifié des logiques d'émission et de réception du circuit intégré constituant un port d'interface série parallèle selon l'invention,
- la figure 4 représente un graphe d'état simplifié du séquenceur d'émission de la figure 3,
- la figure 5 représente un exemple illustratif d'une suite de caractères du flot de caractères généré par le séquenceur d'émission de la figure 3,
- la figure 6 représente un graphe d'état simplifié du séquenceur de réception de la figure 3,
- la figure 7A représente un tableau répertoriant les erreurs possibles dans les messages lors du contrôle de la cohérence au niveau des caractères,
- la figure 7B représente un tableau détaillant les cas possibles d'erreurs répertoriées par le tableau de la figure 7A,
- la figure 8 représente schématiquement le mode de régulation du flot de messages entre les tampons des parties émission et réception du circuit intégré constituant un port d'interface série parallèle selon l'invention.

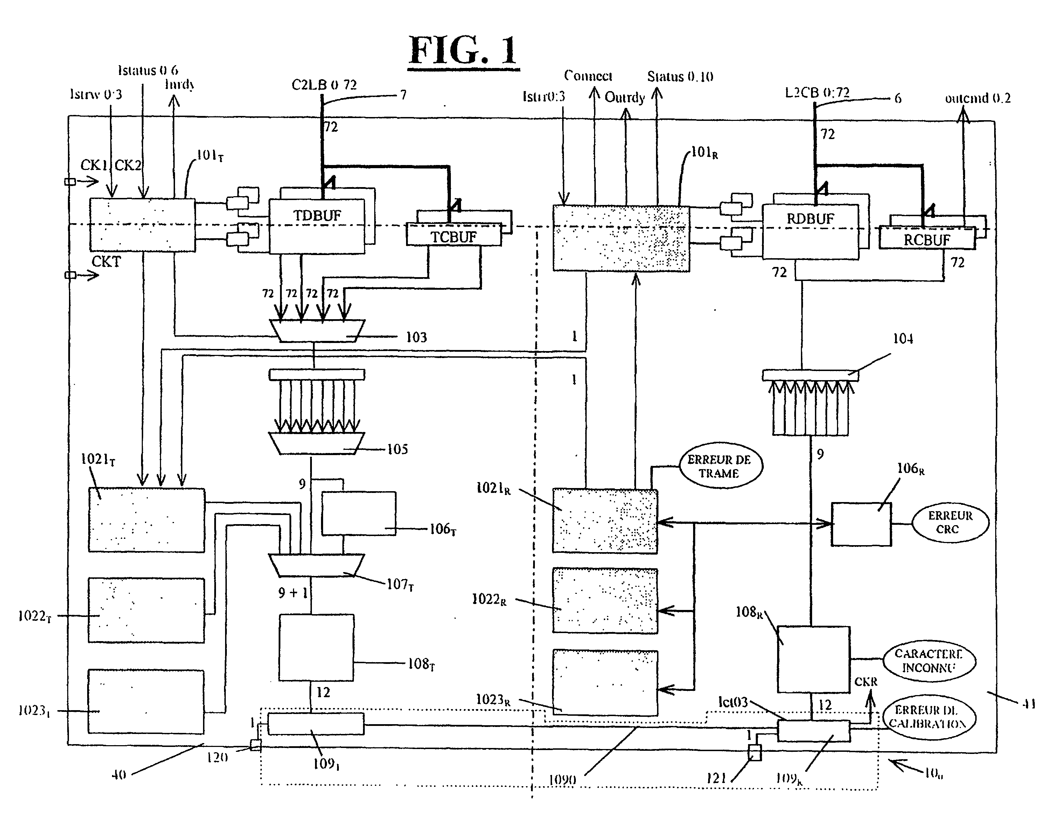

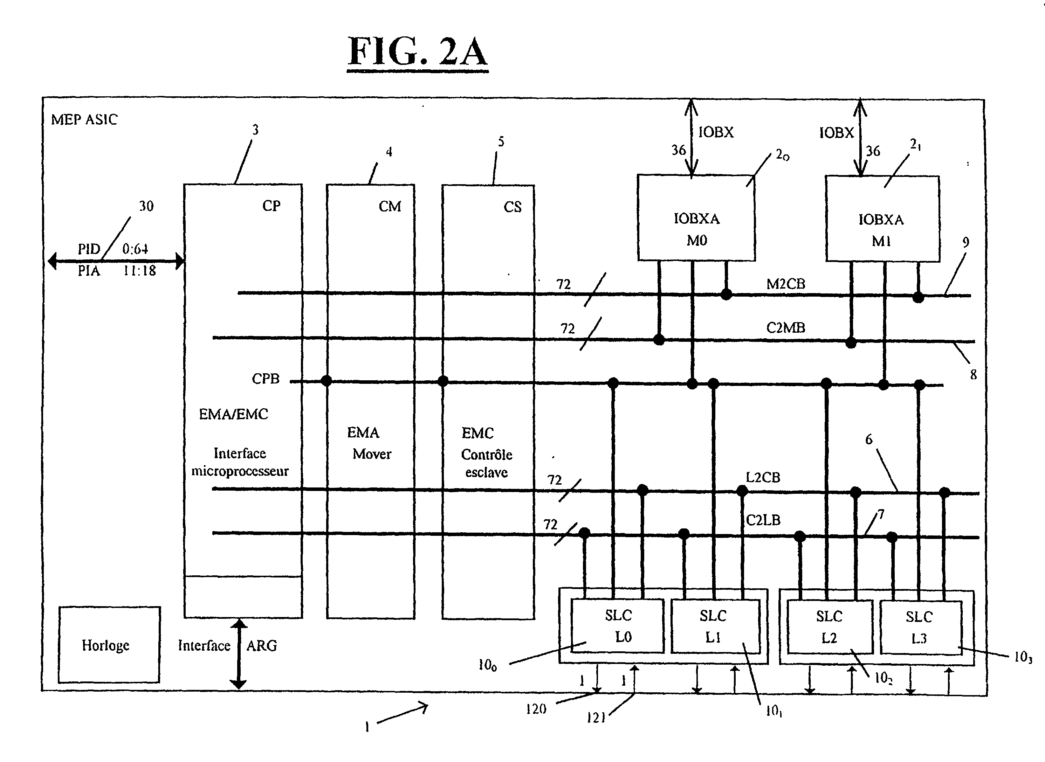

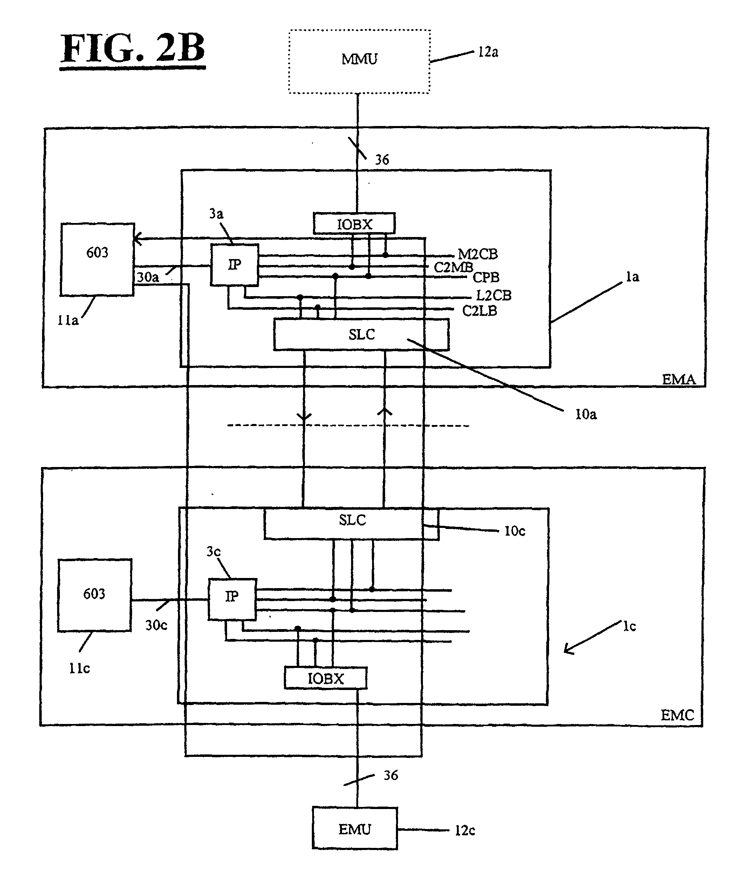

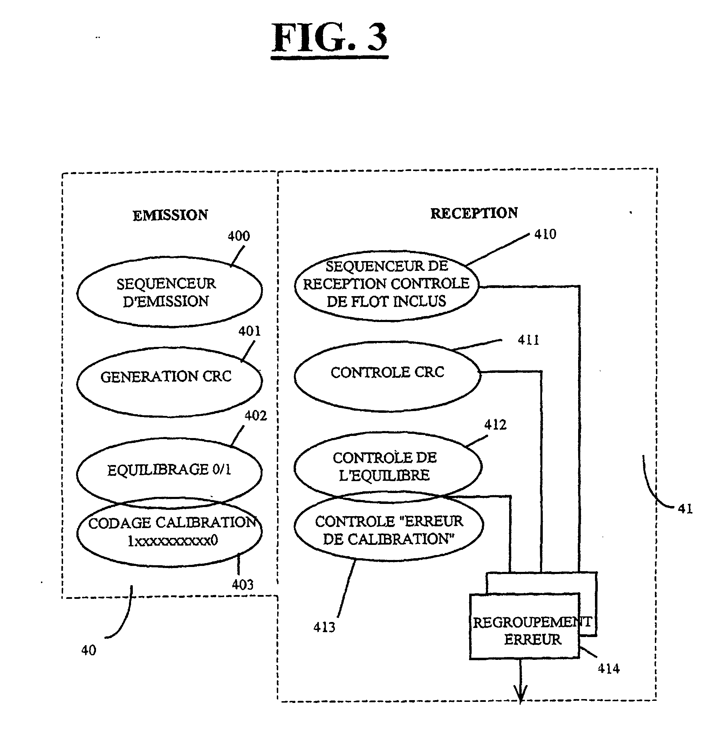

Le port 10ₒ appelé bloc de contrôle de la liaison série SLC (Serial Link Control) est incorporé dans un circuit intégré du type de celui, par exemple, représenté à la figure 2A. Ce circuit intégré (1) comporte une pluralité de port 10⁰, 10¹, 10², 10³ du même type que celui de la figure 1, lesquels communiquent à une fréquence système, par exemple de 33 MHz, avec deux bus parallèles de données de 72 bits, L2CB en entrée (6) et C2LB en sortie (7). Ces bus parallèles communiquent avec des circuits logiques (3, 4, 5) réalisant pour le circuit (3) une fonctionnalité d'interface avec un microprocesseur par l'intermédiaire d'un bus 64 bits (30), pour le circuit (4) une fonctionnalité de déplacement (MOVER) pour le circuit intégré lorsque celui-ci est incorporé dans une carte de type données, et pour le circuit (5) une fonctionnalité de contrôleur mémoire (Slave Control). Ces circuits (3, 4, 5) communiquent également par deux bus de données de 72 bits M2CB (9), C2MB (8), avec deux interfaces d'entrée sortie IOBX 2°, 2¹, qui permettent la communication avec des bus 36 bits provenant soit d'une mémoire (12a, fig. 2B) principale MMU, soit d'une mémoire (12c) d'extension EMU comme représenté à la figure 2B. Un bus de commande CPB permet au microprocesseur communiquant avec le circuit intégré (1) d'accéder aux registres de contrôle et de statut (Status) des différents circuits (3, 4, 5, 2, 10) présent dans le circuit intégré. Ce circuit intégré (1) est utilisé dans une machine comportant une mémoire principale (12a), une mémoire étendue (12c) partageable par plusieurs systèmes. Un premier circuit intégré (1a) maître selon l'invention communique par le bus (30a) avec un premier processeur (11a) et par l'interface IOBX avec la mémoire (12a), tandis qu'un deuxième circuit intégré (1c) esclave communique d'une part, avec le premier circuit maître (11a), et d'autre part par le bus (30a) avec un deuxième processeur (11c) et avec une mémoire étendue (12c). Le port (10a) de transmission parallèle série et de réception série parallèle du circuit (1a) comporte pour la partie émission (40, figure 1) une paire de tampons de données (buffers) TDBUF de 8 x 72 bits reliés au bus de transmission C2LB. Les termes transmission et émission ont une signification identique et sont employés indifféremment dans la suite. Un multiplexeur (103) permet de sélectionner l'un des deux tampons (buffers) TDBUF ou l'un des deux tampons (buffer) TCBUF de signaux de commande qui contiennent l'en-tête. Un buffer TCBUF et un buffer TDBUF peuvent être unifiés pour former un buffer TBUF. Les informations sortant du multiplexeur (103) sont envoyées sur un circuit (105) de désassemblage, lequel génère une succession de caractères de 9 bits constituant les caractères à transmettre. Ce circuit de désassemblage (105) est également relié à un circuit de génération de caractère de contrôle cyclique redondant CRC (106_{T}). Un second multiplexeur (107) permet de sélectionner les signaux transmis à un codeur (108_{T}) permettant le codage 9/12 des informations transmises en associant au caractère normal formé d'un nonet, un bit de contrôle et, en complétant à 12 bits par un bit de start et un bit de stop. Les bits de start et de stop sont par exemple égaux respectivement à 1 et 0. Ces bits de start et de stop servent à la calibration de la liaison et, comme décrit ci-après, permettent également une détection d'erreur de cohérence du codage des caractères au niveau des bits. Ce codage sur 10 bits donne donc 1024 possibilités. On forme ainsi, par exemple, 512 caractères dits "normaux" qui véhiculent les données et 126 caractères de contrôle qui servent à coder d'autres informations que des données. Les caractères normaux comportent des données ou des caractères de contrôle cyclique redondant (CRC). Les caractères de contrôle comportent des caractères nuls ou messages neutres (idle), des caractères de début de cadre (frame), des caractères de fin de cadre (frame) et des caractères de contrôle de flux (jetons) associés chacun à un tampon (buffer) de réception (RDBUF) respectif. Les messages ou données sont véhiculées dans des trames ou cadres (frame). Les caractères de début de cadre (frame) contiennent des informations sur le format des messages contenus dans les cadres concernés tels que la longueur et/ou le type du message. Les caractères de fin cadre (frame) contiennent des informations sur la validité des messages et sur l'identité du buffer source (TDBUF). Les caractères de contrôle de flux (jetons) sont quant à eux destinés à indiquer la disponibilité des tampons respectifs. Les caractères de début et de fin de cadre (frame) encadrent les caractères normaux constituant les messages. Les messages ou données sont par exemple des requêtes ou des réponses à des requêtes. Les caractères de contrôle de fin de cadre indiquent si les caractères dans le cadre comportent un en-tête, c'est à dire un ensemble, par exemple de 8 mots de 9 bits, qui contient, des informations sur le type de message véhiculé, des informations sur la source de la demande et des informations sur la validité du message. L'en-tête contient par ailleurs, soit des données dans le cas où le message est une interruption, soit une adresse mémoire dans le cas où le message est une requête. Les informations sur la validité du message qui sont contenus dans l'en-tête indiquent, dans le cas où le message est une requête d'accès mémoire, si le message a été véhiculé et si la mémoire a délivré un message d'erreur, par exemple une erreur simple ou une erreur double. Le codage 9/12 est effectué pour que le signal transmis sur la ligne série ne comporte pas de composante continue (DC Balance). Les caractères de contrôle ont un code digital équilibré, c'est à dire comportent autant de 0 que de 1. Ainsi, les caractères de contrôle que sont les messages neutres (idle) sont constitués de six 1 suivis de six 0. Les caractères normaux sont soit équilibrés, soit ont deux codes avec la même valeur absolue de déséquilibre. Le codage 9/12 est effectué pour que le déséquilibre courant cumulé des codes du flot de messages reste compris dans une fourchette [+10; -10]. A cet effet, la partie (40, figure 3) émission connaît le déséquilibre de chaque caractère ainsi que le déséquilibre global courant de la transmission. Lorsqu'un caractère à transmettre a deux versions opposées de codage, par exemple +3 ou -3, la partie émission code ce caractère de manière à faire tendre le déséquilibre global vers zéro.

Le multiplexeur (107) reçoit des signaux provenant d'une machine (1021T) d'état de transmission du lien série qui contient au moins un compteur à 2 bits de jetons, dont chaque bit représentant un jeton indique la disponibilité du tampon associé. Le multiplexeur (107) reçoit des signaux provenant d'une machine d'état de substitution (1022_{T}), et des signaux provenant d'une machine d'état d'initialisation du port (1023_{T}). La sortie du codeur (108_{T}) est reliée à un circuit sérialiseur (109_{T}) dont la sortie constitue une ligne série (120) qui émet des signaux à une vitesse par exemple de 1 Giga bits/sec. Le sérialiseur est également relié par une liaison série de rebouclage (1090) à un désérialiseur (109_{R}) du circuit de réception, ou partie réception (41) du port (10°). Cette liaison série de rebouclage (1090) est validée sur le désérialiseur (109_{R}) par un signal (Ict03). Chaque tampon (buffer) de transmission est contrôlé par une machine d'état de gestion des tampons (buffers) de transmission (101_{T}) laquelle reçoit Istatus 0 : 6, Istrw 0 : 3, et émet le signal Inrdy. Dans la partie (41) réception, le désérialiseur (109_{R}) est relié à un décodeur (108_{R}) fonctionnant sur le même principe que le codeur (108_{T}) du circuit de transmission. Ce décodeur du circuit de réception envoie les 9 bits de chaque donnée sur un circuit (104) d'assemblage des données, pour transformer en message de (1 x 72, 3 x 72, 8 x 72, 9 x 72) bits les données reçues en série, qui sont chargées dans une paire de tampons (buffers) de réception de données (RDBUF). Cette paire de tampons (buffers) de réception de données (RDBUF) est contrôlée par une machine de gestion des tampons (buffers) de réception (101_{R}) et est associée à une paire de tampons de réception de commande (RCBUF) qui contiennent les en-têtes des messages. La sortie du décodeur (108_{R}) du circuit de réception est branchée à un circuit de code de vérification de messages élaborant un caractère de contrôle cyclique CRC (106_{T}) pour comparaison. Le CRC_{N+1} est mis à jour après chaque réception de 9 bits de données en calculant sur 16 bits le CRC par un algorithme de permutation cyclique à partir des données reçues Dᵢ et des valeurs Rᵢ des bits du CRC_{N} précédent. Bien sûr, on peut prévoir de calculer le CRC sur 18 bits au lieu de 16 bits. Les informations transmises par ce décodeur (108_{R}) sont également transmises d'une part, à une machine d'état constituant un tampon (buffer) d'historique (1022_{R}), et d'autre part, à une machine d'état du port de réception (1021_{R}), et enfin à une machine d'état d'initialisation (1023_{R}) du port. La machine (101_{R}) d'état de gestion du tampon (buffer) de réception émet trois signaux (Connect, Outrdy, Status 0 : 10), et reçoit en entrée sur trois lignes les informations (Istrr 0 : 3). Le signal (Outrdy) indique que la sortie est prête, ce signal indique qu'il y a un message complet en attente de lecture. Le signal Status indique le statut des sorties : interruptions ou non, opérations indivisibles ou non, accès mémoire/registres d'accès, local/éloigné ou ISCON/non ISCON, source micro/transbordeur (MOVER) - esclaves (SLAVE), réponses différées ou non, dernier message ou non, erreur de données ou non, accès hors mémoire ou non, message insignifiant ou non. La sortie Connect indique que le port SLC (10°) est déconnecté quand cette sortie est désactivée. Les entrées lstrr permettent la lecture des ports de réception en ordre FIFO, et la commande qui lit le dernier double mot d'un message engendre la génération d'un caractère de contrôle de flux (jeton) associé avec le tampon (buffer) qui devient ainsi libre. Ce caractère de contrôle de flux est transmis de la machine d'état de gestion des tampons (buffers) de réception (101_{R}) à la machine d'état de gestion de la transmission (1021T), et à travers celle-ci au multiplexeur (107) de façon à transmettre cette information au port (10c) d'entrée de la carte (1c) associée dans la liaison série au port (109_{R}) de réception dont on vient de lire les tampons (buffers) de réception (RDBUF). La machine d'état de gestion des tampons (buffers) de transmission (101_{T}) comporte deux entrées Istatus et Istrw, et une sortie Inrdy. Cette sortie Inrdy indique qu'il y a un tampon (buffer) de transmission (TDBUF) libre en attente pour être écrit. Les lignes Istatus permettent de préciser les types de message à écrire, et de déterminer en fonction de la valeur des deux premiers bits de status les significations suivantes : 00 ne sont pas utilisés, 01 il s'agit seulement de données, 10 il s'agit d'un entête (header), 11 il s'agit d'un entête et de données. Le troisième bit Istatus, indique s'il s'agit du dernier message ou non. Le quatrième bit, qu'il s'agit d'une erreur de données ou non ; et le cinquième bit si on a un accès extérieur à la mémoire ou non. Enfin le signal Istrw permet d'écrire les tampons (buffers) de transmissions (TDBUF) en ordre FIFO. Le signal Istrw qui écrit le dernier double mot d'un message initialise la transmission du message dès qu'un tampon (buffer) de réception (RDBUF) éloigné (par exemple du port 10c) est déclaré libre par un port de réception relié à la liaison série (120) et lorsque l'éventuelle transmission en cours depuis un autre tampon (buffer) d'émission du même port parallèle série est terminée.

La figure 3 représente de manière simplifiée les parties ou logiques de transmission (40) et de réception (41) du circuit intégré constituant un port d'interface série parallèle selon l'invention. La logique de transmission (40) comporte un séquenceur d'émission (400) des messages correspondant à la machine (1021T) d'état de transmission de la figure 1. La logique d'émission (40) assure la génération (401) du CRC pour chaque message par le circuit (106_{T}, figure 1) qui calcule le code de contrôle redondant cyclique (CRC) sur toutes les données de chaque message à transmettre et associe à chaque message non nul à transmettre son CRC calculé. Le cadre (frame) du message est constitué d'un caractère de contrôle de début de cadre suivi soit d'un en-tête, soit de données, soit d'un en-tête et de données, suivi d'un caractère de fin de cadre et enfin du CRC. La logique d'émission (40) effectue également par le circuit (108_{T}, figure 1), comme détaillé ci-dessus, le codage des caractères au niveau des bits en assurant l'équilibrage (402) en 0 et 1, ainsi que le codage (403) pour la calibration de chaque caractère en le faisant commencer par un 1 (start) et finir par un 0 (stop). La logique de réception (41) assure, par le circuit (108_{R}, figure 1), le contrôle à la volée de la cohérence du codage des messages au niveau des bits, le contrôle de la cohérence du flot de caractères par le circuit (1021_{R}, figure 1) et le contrôle des données des messages par recalcul du CRC dans le circuit (106_{R,} figure 1). Par ailleurs et comme décrit plus en détail ci-après, le dispositif de détection d'erreur contrôle également que les tampons des parties émission (40) (TDBUF) et réception (41) (RDBUF) sont toujours synchrones et utilisés de manière cyclique. La logique d'émission (40) est dupliquée à la réception (41). Ainsi, la logique de réception (41) comporte un séquenceur de réception (410) qui contrôle la cohérence du flot de caractères et qui correspond à la machine d'état du port de réception (1021_{R}) de la figure 1. Ainsi, le séquenceur de réception (410) contrôle la cohérence du flot de caractères constituant les messages pour détecter les transformations, suite à des perturbations, de caractères normaux en caractère de contrôle et inversement. Les transformations de caractères normaux en autres caractères normaux sont quant à eux détectés par l'opération de contrôle du CRC (411) effectué par le circuit (106_{R,} figure 1). La logique de réception (41) contrôle également l'équilibre (412) du codage en bits par le circuit (108_{R}), c'est à dire vérifie que le déséquilibre courant au niveau des bits reste compris dans la fourchette [+10; -10]. Enfin, la logique de réception (41) contrôle par l'opération (413) effectué par le circuit (109_{R}), si les caractères ne présentent pas une erreur de calibration, c'est à dire si tous commencent par un bit de début (start) et se terminent par un bit de fin (stop). Une incohérence détectée dans le flot de messages par le séquenceur de réception (410), ou lors du contrôle CRC (411), ou lors du contrôle de l'équilibre (412) ou lors du contrôle d'erreur de calibration, engendre un message d'erreur vers une logique (414) de regroupement d'erreur. Cette logique (414) de regroupement d'erreur est la seule partie de logique de réception qui ne possède pas de "vis-à-vis" dans la logique d'émission. Quel que soit la partie qui détecte l'erreur, les parties émission (40) et réception (41) sont mises en état d'erreur et la liaison est automatiquement réinitialisée.

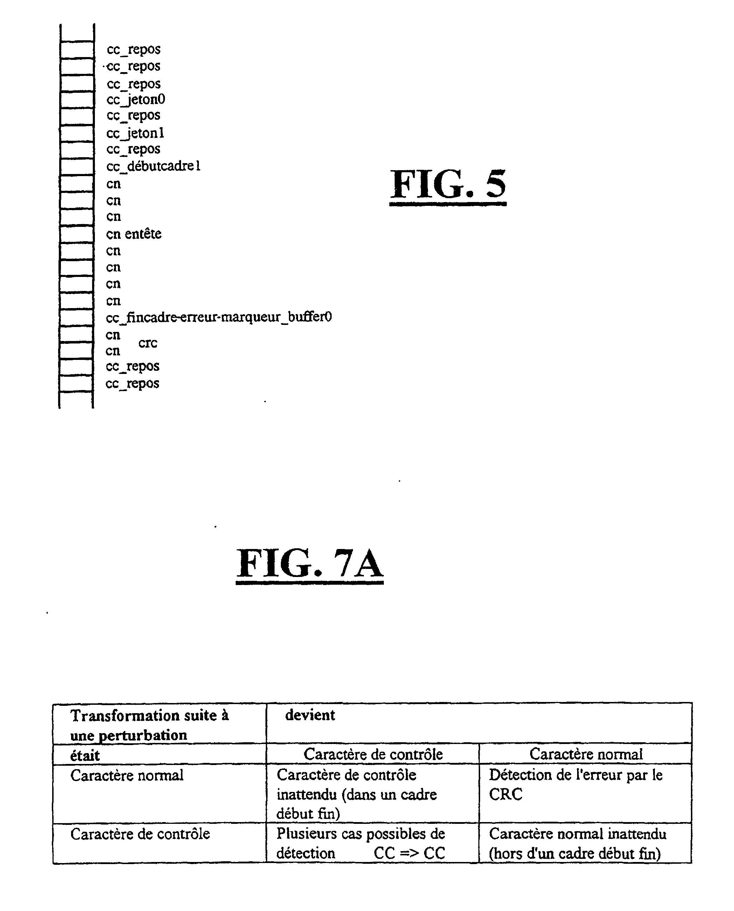

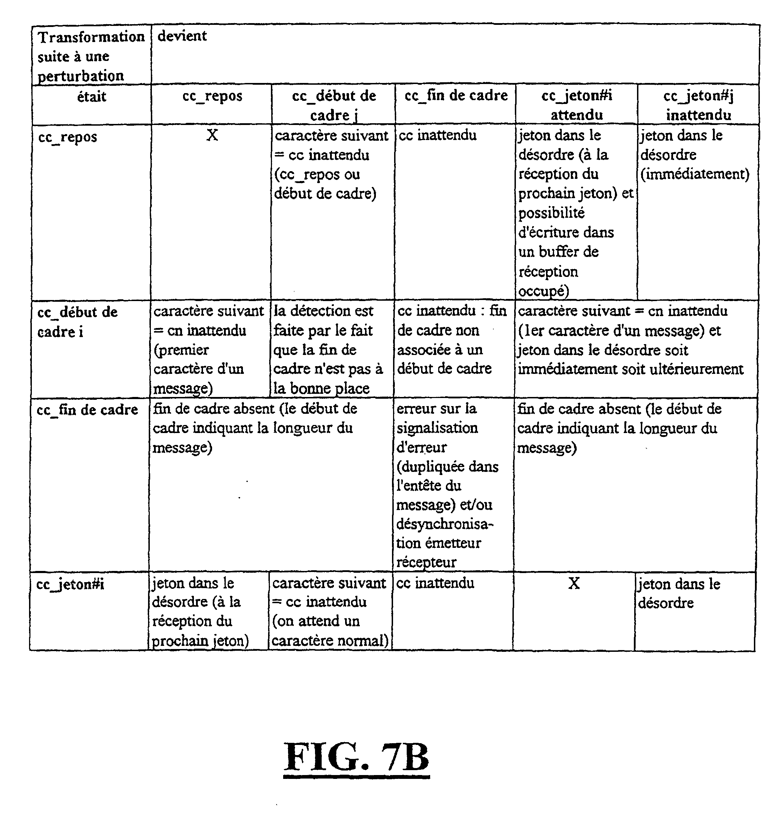

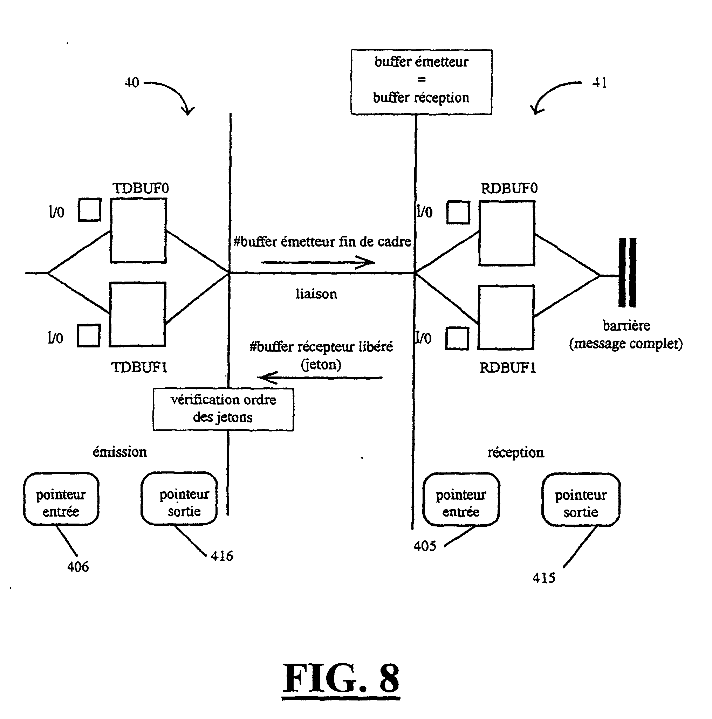

La figure 5 représente un exemple illustratif d'une suite de caractères du flot de caractères véhiculés par la liaison série. La liaison série fonctionne sur un mode continu, c'est à dire que des caractères nuls ou messages neutres (idle) sont disposés dans le flot continu entre les caractères ou messages ayant une signification. L'exemple de suite de caractères de la figure 5 commence par trois caractères (cc_repos) de contrôle de repos (idle) qui se succèdent, puis se poursuit par le jeton (cc_jeton0) du tampon (buffer) numéro 0, puis un caractère de repos, puis, un caractère de contrôle de début de cadre numéro 1 (cc_débutcadre1 ) puis huit caractères normaux (cn) puis un caractère de contrôle de fin de cadre (cc-fincadre), puis deux caractères de huit bits du CRC etc... Les caractères de contrôle que sont les jetons numéro 0 et jeton numéro 1 sont générés pour signaler respectivement que le tampon numéro 0 et le tampon numéro 1 (figure 7) de réception (RDBUF) ont été vidés et que ces derniers sont libres. Les tampons (TDBUF, RDBUF) des parties (40) émission et réception (41) sont égaux en nombre et sont toujours en phase et utilisés de manière cyclique. Dans l'exemple de réalisation décrit nullement limitatif, il y deux tampons d'émission (TDBUF) numérotés respectivement 0 et 1 et deux tampons (RDBUF) de réception numérotés respectivement 0 et 1 (figure 8). Bien sûr on peut prévoir dans une variante un nombre de tampons d'émission et de réception supérieur à deux.

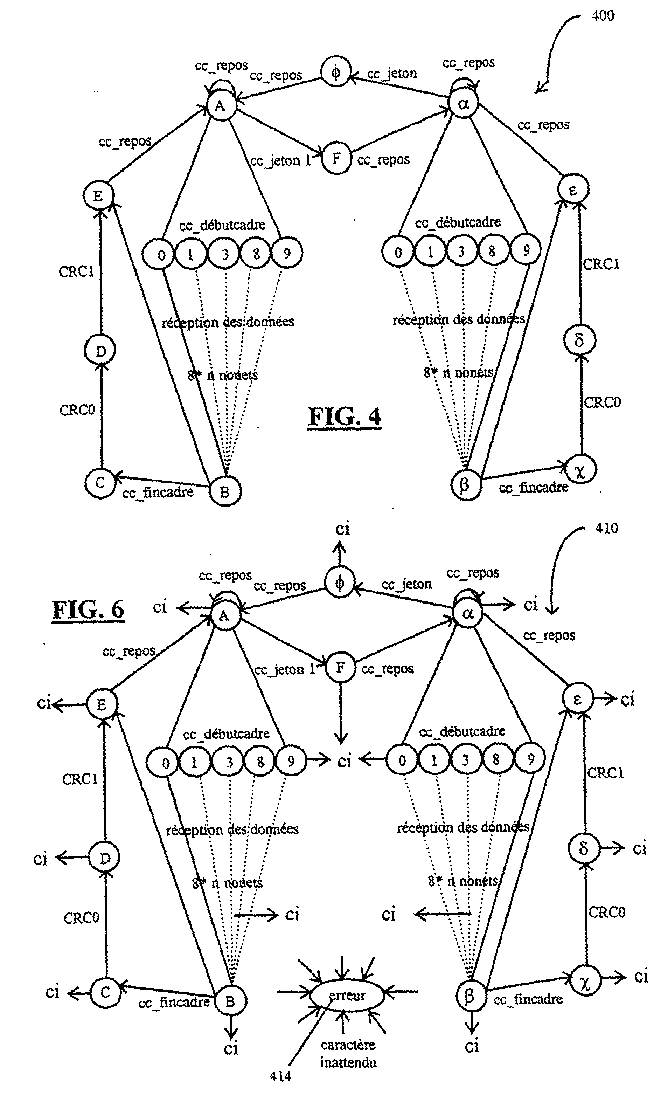

La figure 4 représente un graphe d'état simplifié de la machine d'état de contrôle du flot de caractères constituant le séquenceur d'émission (400), illustrant la suite logique des différents caractères des messages. Ainsi, pour émettre l'exemple de séquence de la figure 5, le séquenceur d'émission (400) peut partir par exemple du point (α) et se reboucler trois fois sur lui-même pour symboliser l'émission de la suite des trois premiers caractères de repos. Puis le séquenceur d'émission (400) émet le jeton numéro 0 en passant au point (φ). On remarque à ce stade que le caractère émis suivant ne peut être qu'un caractère neutre (idle). C'est à dire qu'après un jeton, le séquenceur d'émission (400) émet, en allant au point A, au moins un caractère de repos neutre, ceci pour éviter que deux jetons se succèdent immédiatement l'un après l'autre. La séquence de la figure 5 continue par l'émission du jeton numéro 1, c'est à dire que le séquenceur d'émission (400) passe à l'étape (F). Puis le séquenceur d'émission (400) émet un caractère de repos pour revenir au point (α). Un caractère de début de cadre numéro 1, puis, huit nonets ou caractères normaux sont ensuite émis pour arriver au point (β). Ensuite, après la fin des données du message formé par les caractères normaux, le séquenceur d'émission (400) émet obligatoirement un caractère de fin de cadre (χ), puis un premier CRC, ou CRC numéro zéro (point δ), puis un second CRC, ou CRC numéro 1 (point ε). Enfin, le séquenceur d'émission (400) revient au point (α) en émettant un caractère de repos. Tout le flot de caractère est émis selon les mêmes principes que décrits ci-dessus en référence à la partie droite de la figure 4 pour le premier tampon et à la partie gauche de la figure 4 pour le deuxième tampon.

La figure 6 représente un graphe d'état simplifié du séquenceur de réception (410) de la figure 3, illustrant le contrôle de la suite logique des différents caractères des messages. La logique du séquenceur de réception (410) constitue la duplication de la logique du séquenceur d'émission (400, figure 4), aussi, le graphe du séquenceur de réception (410) est sensiblement identique à celui du séquenceur d'émission (400), les éléments identiques étant désignés par les mêmes références. Le séquenceur de réception (410) contrôle la cohérence de la suite de caractères du flot et émet un message d'erreur (414) lorsqu'il détecte un caractère inattendu (ci).

La figure 7A représente un tableau répertoriant les erreurs de cohérence possibles dans le flot de caractères des messages, détectées par la partie réception (41). Ainsi, si suite à une perturbation un caractère normal est transformé, entre l'émission et la réception, en un caractère de contrôle (CC), le séquenceur de réception (410) détecte ce dernier comme étant un caractère inattendu (ci) puisqu'un caractère de contrôle ne peut se retrouver à l'intérieur d'un cadre (frame). Si par contre un caractère normal est transformé, entre l'émission et la réception, en un autre caractère normal, l'erreur est détectée au niveau du CRC. De même, si un caractère de contrôle est transformé, entre l'émission et la réception, en un caractère normal, le séquenceur de réception (410) détecte ce dernier comme étant un caractère inattendu puisqu'un caractère normal ne peut se retrouver isolé en dehors d'un cadre (frame). Si un caractère de contrôle (CC) est transformé en un autre caractère de contrôle (CC), les différents cas possibles sont détaillés à la figure 7B.

Si suite à une perturbation un caractère de repos est transformé, entre l'émission et la réception, en un autre caractère de repos, cela ne constitue pas une erreur et cela n'a donc aucun effet. Si un caractère de repos est transformé en caractère de début de cadre, le caractère suivant sera détecté comme caractère inattendu. En effet, après un caractère de repos seul peut suivre un autre caractère de repos ou un caractère de début de cadre ou un jeton, ce qui dans tous les cas est en contradiction avec le caractère de début de cadre déjà reçu de manière erronée. Si un caractère de repos est transformé en caractère de fin de cadre, le séquenceur de réception (410) détecte ce dernier comme étant un caractère inattendu (ci) puisque n'étant pas associé à un caractère de début de cadre. Si un caractère de repos est transformé en un jeton numéro (i) qui est attendu, c'est à dire correspondant au tampon numéro (i) occupé, la partie réception (41) va détecter, lors de la réception du prochain jeton, que les jetons sont arrivés dans le désordre. On rappelle que les tampons des parties émission (40) (TDBUF), et réception (41) (RDBUF) sont toujours synchrones et utilisés de manière cyclique. A cet effet, la partie réception (41) contrôle en permanence que les jetons numéro 0 et numéro 1, associés respectivement aux tampons de réception (RDBUF) numéros 0 et numéro 1 sont émis toujours dans le même ordre. Par ailleurs, la logique de réception (41) sait en permanence quels sont les tampons occupés et les tampons libres, les jetons correspondants aux tampons occupés étant attendus par la partie réception. Une réception injustifiée du jeton (i) attendu peut également être détectée presque immédiatement comme une erreur puisque dans ce cas la réception de ce jeton (i) indique à tort que le tampon numéro (i) est libre en écriture, ce qui va déclencher une erreur si un ordre d'écriture dans ce tampon (i) occupé est transmis. Si un caractère de repos est transformé en un jeton numéro (j) qui est inattendu, la partie réception (41) va détecter ce dernier comme un caractère inattendu car l'ordre d'arrivée des jetons n'est pas respecté. Si un caractère de début de cadre (i) est transformé en un caractère de repos, le séquenceur de réception (410) détectera le caractère suivant, à savoir un caractère normal (cn), comme étant un caractère inattendu puisque étant hors de son cadre. Si un caractère de début de cadre (i) est transformé en un caractère de début de cadre (j) la partie réception (41) détectera l'erreur par le fait que la fin de cadre n'est pas à la bonne place. En effet, on rappelle que chaque caractère de début de cadre contient une information sur la longueur du message concerné, la partie réception (41) s'attend ainsi à recevoir le caractère de fin de cadre à un endroit déterminé. Si un caractère de début de cadre (i) est transformé en un caractère de fin de cadre, le séquenceur de réception (410) détectera ce dernier comme un caractère inattendu, le caractère de fin de cadre n'étant pas associé à un caractère de début de cadre. Si un caractère de début de cadre (i) est transformé soit en un jeton (i) attendu, soit en un jeton (j) inattendu, la partie réception (41) détectera le caractère suivant, à savoir le premier caractère normal d'un message, comme étant un caractère inattendu. En effet, le premier caractère normal du message est dans ce cas hors de son cadre. Cette erreur peut également être détectée, soit immédiatement, soit ultérieurement par le fait que le jeton émis par erreur arrive dans le désordre. Si un caractère de fin de cadre est transformé en un caractère de repos ou en un caractère de début de cadre (j), le séquenceur de réception (410) détectera l'erreur par le fait que le caractère de fin de cadre attendu, dont la position est donnée par l'information contenue dans le caractère de début de cadre, est absent. Si un caractère de fin de cadre est transformé en un autre caractère de fin de cadre, la partie réception (41) détectera l'erreur par le fait qu'il y aura incohérence entre les informations contenues dans l'en-tête du message et les informations contenues dans le caractère de fin de cadre. En effet, on rappelle que les caractères de contrôle de fin de cadre contiennent des informations sur la validité et la nature du message, ces informations étant dupliquées dans l'en-tête. L'erreur peut également être détectée par le fait qu'il y a désynchronisation entre la partie émetteur (40) et la partie récepteur (41), le numéro du tampon (buffer) utilisé étant également codé dans le caractère de contrôle de fin de cadre. Si un caractère de fin de cadre est transformé en un jeton (i) attendu ou en un jeton (j) inattendu, la partie réception (41) détectera l'erreur, comme décrit précédemment, par le fait que le caractère de fin de cadre attendu est absent. Si un jeton (i) est transformé en un caractère de repos, la partie récepteur (41) détectera l'erreur à la réception du prochain jeton, ce dernier arrivera en effet dans le désordre. Si un jeton (i) est transformé en un caractère de début de cadre, le séquenceur de réception (410) détectera l'erreur par le fait que le caractère suivant, à savoir un caractère normal sera absent. L'erreur peut également être détectée ensuite par le fait que les jetons arrivent dans le désordre. Si un jeton (i) est transformé en un caractère de fin de cadre, le séquenceur de réception (410) détectera ce dernier comme un caractère inattendu car non associé à un début de cadre. Enfin, si un jeton numéro (i) est transformé en un jeton numéro (j) inattendu, la partie récepteur (41) détectera l'erreur par le fait que les jetons arrivent dans le désordre.

La figure 8 illustre la régulation du flot de messages entre les tampons des parties émission (40) et réception (41) du circuit intégré constituant un port d'interface série parallèle selon l'invention. Les deux tampons (buffers) de données d'émission (40) ou de réception, (41) fonctionnent avec une horloge système spécifique ayant une fréquence correspondant à celle du bus interne du circuit intégré. Les deux tampons d'émission (40) sont numérotés respectivement 0 et 1 et les deux tampons (41) de réception numérotés respectivement 0 et 1. Comme décrit précédemment, pour vérifier que les tampons des parties (40) émission et réception (41) sont toujours en phase et utilisés de manière cyclique, le dispositif de détection d'erreur contrôle en permanence que les jetons numéro 0 et numéro 1, associés respectivement aux tampons de réception (41) numéros 0 et numéro 1 sont émis toujours dans le même ordre. C'est à dire que les tampons de réception se libèrent toujours dans le même ordre. Par ailleurs on rappelle que le numéro du tampon d'émission (40) est inclus dans le caractère de fin de cadre du message. Ainsi, la logique de réception (41) contrôle en permanence que le numéro du tampon émetteur de chaque message est égal au numéro du tampon récepteur de ce message. Avec ces deux contrôles, on vérifie précisément que les tampons en émission (40) et en réception (41) sont en phase et utilisés de manière cyclique. A l'initialisation de la liaison série, tous les tampons de réception (41) sont vides et les pointeurs d'entrée (406, 405) et de sortie (416, 415) des tampons d'émission (40) et de réception (41) sont à zéro. Un message n'est émis que si la place nécessaire est disponible du côté réception (41). A cet effet, chacun des tampons TDBUF des parties émission (40) et RDBUF réception (41) sont pourvus d'un bit de contrôle indiquant si le tampon concerné est libre ou occupé (l/o). De cette manière, la logique d'émission (40) sait en permanence quels sont les tampons occupés et les tampons libres. Un tampon de réception n'est vidé qu'après réception complète d'un message. La logique de lecture (101_{R}, figure 1) des tampons de réception (41) est reliée à l'ensemble des bits de contrôle de l'état d'occupation des tampons (RDBUF, figure 1) par une fonction "OU". C'est à dire que de lecture des tampons de réception (41) n'est possible que si l'un au moins de ces tampons RDBUF de réception est occupé. Les lectures et écritures dans les tampons sont asynchrones. Ce n'est qu'après la réception complète et correcte de l'ensemble du message que la partie réception signale à l'extérieur sa disponibilité en vue de sa lecture. Cette réception d'un message n'est complète qu'après vérification, en plus des contrôles de cohérence du message décrit ci-dessus, que le CRC recalculé par la partie réception est égal au CRC reçu. Cette attente de la réception complète et correcte de l'ensemble du message avant sa transmission n'a qu'un effet négligeable sur la latence du processus. En effet, les messages sont essentiellement des transferts de mémoire à mémoire de 4K nonets en moyenne. Ainsi, l'attente de réception de 64 nonets de chaque message avant sa disponibilité est faible par rapport au temps de transfert en mémoire de 4K nonets.

En résumé, six types d'erreurs sont détectées, à savoir : les erreurs de calibration (présence des bits start et stop), les erreurs du fait qu'un caractère de contrôle ou de donnée inattendu est détecté dans le flot de caractère, les erreurs de cohérence au niveau des cadres (frame), les erreurs de données détectées par le CRC, les erreurs dans le cas d'utilisation non cycliques ou déphasées des tampons d'émission et de réception et enfin les erreurs de déséquilibre cumulé courant entre le nombre de bits à 0 et le nombre de bits à 1 du flot de messages lorsque la différence entre ces nombres sort de la fourchette [-10 ; + 10]. De cette manière, tous les messages erronés sont détectés et peuvent être confinés. On comprend que par ces mécanismes simples à mettre en oeuvre dans le port d'entrée sortie d'un circuit intégré, on permet la détection d'erreurs et le contrôle du fonctionnement correct du circuit de port d'entrée sortie dans une liaison série à haut débit assurant ainsi la correction des erreurs, même si le taux d'erreurs est très faible. En effet, cette procédure exhaustive de détection d'erreurs, associée à une procédure de réinitialisation du lien et une procédure de purge de l'ensemble des messages résiduels, permet d'utiliser un lien non fiable sans visibilité pour l'utilisateur dans le cadre d'un ensemble logique autorisant, par exemple, un arrêt par an.

D'autres modifications à la portée de l'homme de métier font également partie de l'invention telle que revendiquée.

## Revendications

1. Procédé de détection d'erreurs sur un circuit intégré constituant un port de communication série parallèle haut débit entre un bus parallèle (L2CB, C2LB) et une liaison série, le port (10°) comportant, dans une partie (40) émission, au moins un tampon (TDBUF) de données à transmettre et provenant du bus parallèle et, dans une partie (41) réception, au moins un tampon (RDBUF) de données à recevoir, la partie (40) émission insérant chaque message ou ensemble de données dans un cadre de caractères de contrôle véhiculant des informations sur les messages concernés, la partie (40) émission codant les caractères des messages au niveau des bits, la partie (41) réception procédant à une vérification complète des messages, les tampons (TDBUF, RDBUF) des parties émission (40) et réception (41) étant en nombre identique, **caractérisé en ce que** les tampons (TDBUF, RDBUF) des parties (40) émission et réception (41) sont utilisés de manière synchrone et cyclique, ladite vérification complète dans la partie réception (41) étant réalisée avant écriture du message dans le ou les tampons de réception (RDBUF) la partie réception comportant des moyens d'isolation des caractères des messages en débarrassant les messages des caractères de contrôle, le procédé comportant :
- une étape de contrôle à la volée de la cohérence des messages au niveau de leur codage en bits,
- une étape de contrôle à la volée de la cohérence du flot de caractères constituant les messages,
- une étape de contrôle à la volée que les tampons des parties émission (40) (TDBUF), et réception (41) (RDBUF) sont utilisés de manière synchrone et cyclique,
- une étape de contrôle à la volée des données des messages par calcul du code de contrôle redondant cyclique (CRC) sur toutes les données de chaque message à transmettre.

2. Procédé de détection d'erreurs, selon la revendication 1, **caractérisé en ce que** la partie (40) émission code les caractères des messages de façon à rechercher à avoir une composante continue nulle et en donnant à chaque caractère un bit de début et un bit de fin, l'étape de contrôle à la volée de la cohérence des messages au niveau de leur codage en bits étant réalisée par la partie (41) réception et comportant :
- une étape de vérification que chaque caractère commence par un bit de début et se termine par un bit de fin
- une étape de vérification que le déséquilibre cumulé courant des codes du flot de messages reste cantonné dans une fourchette de valeurs déterminée.

3. Procédé de détection d'erreurs, selon la revendication 1 ou 2, **caractérisé en ce que** les messages ou données sont constitués de caractères dits normaux, des caractères de contrôle comportant des caractères nuls ou messages neutres, des caractères de début de cadre contenant des informations sur le format des messages contenus dans les cadres concernés tels que la longueur et/ou le type du message, des caractères de fin de cadre contenant des informations sur la validité des messages contenus dans les cadres concernés et sur l'identité du buffer source (TDBUF) du message et des caractères de contrôle de flux associés chacun à un tampon de réception (RDBUF) respectif et destinés à indiquer la disponibilité du tampon concerné, l'étape de contrôle à la volée de la cohérence du flux de caractères constituant les messages détectant les transformations, suite à des perturbations, de caractères normaux en caractère de contrôle et inversement, les transformations de caractères normaux en autres caractères normaux étant détectées par le CRC, ou ultérieurement par une erreur de déséquilibre cumulé courant.

4. Procédé de détection d'erreurs, selon la revendication 3, **caractérisé en ce que** l'étape de contrôle à la volée que les tampons (TDBUF, RDBUF) des parties (40) émission et réception (41) sont toujours utilisés de manière synchrone et cyclique comporte:
- une étape de vérification par la partie (41) réception que l'identification ou numéro du tampon d'émission (TDBUF) du message en cours correspond à l'identification ou numéro du tampon de réception (RDBUF) associé, c'est à dire que le pointeur de sortie du tampon d'émission (TDBUF) correspond au pointeur d'entrée du tampon de réception (RDBUF),
- une étape de génération d'un jeton indiquant qu'un tampon de réception (RDBUF) a été vidé et que ce demier est désormais libre,
- une étape de contrôle que les jetons générés lors des libérations des tampons de réception (RDBUF) sont générés de manière cyclique.

5. Procédé de détection d'erreurs, selon la revendication 4, **caractérisé en ce qu'**il comporte
- une étape de vérification que le tampon de réception (RDBUF) destiné à recevoir le message en cours est libre, un message n'étant émis vers la partie (41) réception que si la place nécessaire, y est disponible.

6. Procédé de détection d'erreurs, selon la revendications 4 ou 5, **caractérisé en ce qu'**à l'initialisation de la liaison série tous les tampons de réception (RDBUF) sont vides et les pointeurs d'entrée et de sortie des tampons d'émission (TDBUF) et de réception (RDBUF) sont à zéro.

7. Procédé de détection d'erreurs, selon l'une quelconque des revendications précédentes, **caractérisé en ce que** les informations transmises sont codées en 9/12 en associant au caractère normal formé d'un nonet le code dont la balance par rapport à la composante continue est choisie pour faire tendre le déséquilibre cumulé vers zéro, un bit de codage direct/inverse et, en complétant à 12 bits par un caractère de start et un caractère de stop.

8. Procédé de détection d'erreurs, selon la revendication 2, **caractérisé en ce que** la fourchette dans laquelle doit rester cantonné le déséquilibre cumulé courant des codes du flot de messages est [+10; -10].

9. Dispositif de détection d'erreurs sur un circuit intégré de mise en oeuvre du procédé selon l'un quelconque des revendications précédentes, le circuit intégré comportant une fonction de commande de liaison série pour constituer un port de communication série parallèle haut débit entre un bus parallèle (L2CB, C2LB) et une liaison série, le port (10°) comportant, dans une partie (40) émission, au moins un tampon (TDBUF) de données à transmettre provenant du bus parallèle et des moyens (109T) de sérialisation en sortie, et, dans une partie (41) réception, au moins un tampon (RDBUF) de données à recevoir et des moyens (109R) de désérialisation en entrée et des moyens (106R) de contrôle des données des messages par calcul du code de contrôle redondant cyclique (CRC) sur toutes les données de chaque message à transmettre, les parties émission (40) et réception (41) ayant le même nombre de tampons, **caractérisé en ce que** la partie (40) émission comporte des moyens d'insertion de chaque message ou ensemble de données dans une trame de caractères de contrôle véhiculant des informations sur les messages concernés, des moyens (108T) de codage des caractères, la partie (41) réception comportant des moyens d'isolation des caractères des messages en débarrassant les messages des caractères de contrôle et des moyens (1023R) de vérification complète des messages avant écriture de ces derniers dans le ou les tampons de réception (RDBUF), les tampons (TDBUF, RDBUF) étant utilisés de manière synchrone et cyclique, le dispositif comportant des moyens (1023R) de contrôle à la volée de la cohérence des messages au niveau de leur codage en bits, des moyens (1023R) de contrôle à la volée de la cohérence du flot de caractères constituant les messages, et des moyens (1 023R) de contrôle à la volée que les tampons des parties émission (40) (TDBUF), et réception (41) (RDBUF) sont utilisés de manière synchrone et cyclique.

10. Dispositif de détection d'erreurs selon la revendication 9 **caractérisé en ce que** les moyens (108T) de codage des caractères assurent un codage en bits des caractères des messages de façon à avoir une composante continue nulle et donnent à chaque caractère un bit de début et un bit de fin, les moyens (1023R) de contrôle à la volée de la cohérence des messages au niveau leur codage en bits contrôlant que chaque caractère commence par un bit de début et se termine par un bit de fin et que le déséquilibre cumulé courant des codes du flot de messages reste cantonné dans une fourchette déterminée.

11. Dispositif de détection d'erreurs selon la revendication 9 ou 10 **caractérisé en ce que** les messages ou données sont constitués de caractères dits "normaux"; les caractères de contrôle comportant, des caractères nuls ou messages neutres des caractères de début de cadre contenant des informations sur le format des messages contenus dans les cadres concernés tels que la longueur et/ou le type du message, des caractères de fin de cadre contenant des informations sur la validité des messages contenus dans les cadres concernés et sur l'identité du buffer source (TDBUF) des messages, les caractères de contrôle comportant également des caractères de contrôle de flux associés chacun à un tampon de réception (RDBUF) respectif et destinés à indiquer la disponibilité du tampon concerné, l'étape de contrôle à la volée de la cohérence du flot de caractères constituant les messages détectant les transformations, suite à des perturbations, de caractères normaux en caractère de contrôle et inversement, les transformations de caractères normaux en autres caractères normaux étant détectées par le CRC.

12. Dispositif de détection d'erreurs selon la revendication 11 **caractérisé en ce que** les moyens (1023R) de contrôle que les tampons (TDBUF, RDBUF) des parties (40) émission et réception (41) qui sont utilisés de manière synchrone et cyclique, comportent des moyens de vérification que l'identification ou numéro du tampon d'émission (TDBUF) du message en cours correspond à l'identification ou numéro du tampon de réception (RDBUF) associé, des moyens de génération d'un jeton indiquant qu'un tampon de réception (RDBUF) a été vidé et que ce dernier est désormais libre, et des moyens de contrôle que les jetons générés lors des libérations des tampons de réception (RDBUF) sont générés de manière cyclique.

13. Dispositif de détection d'erreurs selon la revendication 12 **caractérisé en ce qu'**il comporte des moyens de vérification que le tampon de réception (RDBUF) destiné à recevoir le message en cours est libre, un message n'étant émis vers la partie (41) réception que si la place nécessaire y est disponible.

14. Dispositif de détection d'erreurs selon la revendication 12 ou 13 **caractérisé en ce qu'**il comporte des moyens de comptage du nombre de tampons de réception (RDBUF) libres, et des moyens de leur identification.

15. Dispositif de détection d'erreurs selon l'une quelconque des revendications 12 à 14 **caractérisé en ce qu'**il comporte des moyens assurant la vidange des tampons de réception (RDBUF) et mettant à zéro les pointeurs d'entrée et de sortie des tampons d'émission (TDBUF) et de réception (RDBUF) à l'initialisation de la liaison série.

16. Dispositif de détection selon l'une quelconque des revendications 9 à 15, **caractérisé en ce qu'**il comporte deux tampons (TDBUF) de données à transmettre et deux tampons (RDBUF) de données à recevoir.

17. Dispositif de détection selon la revendication 9, **caractérisé en ce que** la liaison série fonctionne sur un mode continu, des caractères nuls ou messages neutres étant disposés dans le flot continu entre les caractères ou messages ayant une signification.

18. Dispositif de détection selon l'une quelconque des revendications 9 à 17, **caractérisé en ce que** les messages sont des requêtes ou des réponses à des requêtes.

## Patentansprüche

1. Verfahren zum Erfassen von Fehlem in einer integrierten Schaltung, die einen Seriell-Parallel-Kommunikationsport mit hohem Durchsatz zwischen einem parallelen Bus (L2CB, C2LB) und einer seriellen Verbindung bildet, wobei der Port (10⁰) in einem Sendeabschnitt (40) wenigstens einen Pufferspeicher (TDBUF) für Daten, die zu senden sind und von dem parallelen Bus stammen, und in einem Empfangsabschnitt (41) wenigstens einen Pufferspeicher (RDBUF) für zu empfangende Daten umfaßt, wobei der Sendeabschnitt (40) jede Nachricht oder jede Datengesamtheit in einen Rahmen von Steuerzeichen einfügt, die Informationen über die betreffenden Nachrichten transportieren, wobei der Sendeabschnitt (40) die Zeichen der Nachricht auf der Ebene der Bits codiert, wobei der Empfangsabschnitt (41) eine vollständige Verifikation der Nachrichten ausführt, wobei die Pufferspeicher (TDBUF, RDBUF) des Sendeabschnitts (40) und des Empfangsabschnitts (41) in der gleichen Anzahl vorhanden sind, **dadurch gekennzeichnet, daß** die Pufferspeicher (TDBUF, RDBUF) des Sendeabschnitts (40) und des Empfangsabschnitts (41) in synchroner und zyklischer Weise verwendet werden, wobei die vollständige Verifikation im Empfangsabschnitt (41) vor dem Schreiben der Nachricht in den oder die Empfangspufferspeicher (RDBUF) erfolgt, wobei der Empfangsabschnitt Mittel zum Isolieren der Zeichen von den Nachrichten durch Befreien der Nachrichten von den Steuerzeichen umfaßt, wobei das Verfahren umfaßt:
- einen Schritt der im Durchlauf erfolgenden Prüfung der Kohärenz der Nachrichten auf der Ebene ihrer Codierung in Bits,
- einen Schritt der im Durchlauf erfolgenden Prüfung der Kohärenz des Stroms der die Nachrichten bildenden Zeichen,
- einen Schritt der im Durchlauf erfolgenden Prüfung, ob die Pufferspeicher des Sendeabschnitts (40) (TDBUF) und des Empfangsabschnitts (41) (RDBUF) in synchroner und zyklischer Weise verwendet werden,
- einen Schritt der im Durchlauf erfolgenden Prüfung der Daten der Nachrichten durch Berechnen des Codes der zyklischen Redundanzprüfung (CRC) in allen Daten jeder zu sendenden Nachricht.

2. Verfahren zur Fehlererfassung nach Anspruch 1, **dadurch gekennzeichnet, daß** der Sendeabschnitt (40) die Zeichen der Nachrichten in der Weise codiert, daß er versucht, eine Nullkomponente zu erhalten, und jedem Zeichen ein Anfangsbit und ein Endbit verleiht, wobei der Schritt der im Durchlauf erfolgenden Prüfung der Kohärenz der Nachrichten auf der Ebene ihrer Codierung in Bits von dem Empfangsabschnitt (41) ausgeführt wird und umfaßt:
- einen Schritt der Verifikation, daß jedes Zeichen mit einem Anfangsbit beginnt und mit einem Endbit endet,
- einen Schritt der Verifikation, daß das jeweilige kumulierte Ungleichgewicht der Codes des Stroms von Nachrichten auf einen Bereich bestimmter Werte beschränkt bleibt.

3. Verfahren zur Fehlererfassung nach Anspruch 1 oder 2, **dadurch gekennzeichnet, daß** die Nachrichten oder Daten gebildet sind aus sogenannten normalen Zeichen und aus Steuerzeichen, die Null-Zeichen oder neutrale Nachrichten, Rahmenanfangszeichen, die Informationen über das Format der in den betreffenden Rahmen enthaltenen Nachrichten wie etwa die Länge und/oder den Typ der Nachricht enthalten, Rahmenende-Zeichen, die Informationen über die Gültigkeit der in den betreffenden Rahmen enthaltenen Nachrichten und über die Identität des Quellpufferspeichers (TDBUF) der Nachricht enthalten, und Strom-Steuerzeichen, die jeweils einem entsprechenden Empfangspufferspeicher (RDBUF) zugeordnet und dazu bestimmt sind, die Verfügbarkeit des betreffenden Pufferspeichers anzugeben, enthalten, wobei der Schritt der im Durchlauf erfolgenden Prüfung der Kohärenz des Stroms der die Nachrichten bildenden Zeichen die störungsbedingten Transformationen von normalen Zeichen in Steuerzeichen und umgekehrt erfaßt, wobei die Transformationen von normalen Zeichen in andere normale Zeichen durch die CRC oder später durch einen Fehler des jeweiligen kumulierten Ungleichgewichts erfaßt werden.

4. Verfahren zur Fehlererfassung nach Anspruch 3, **dadurch gekennzeichnet, daß** der Schritt der im Durchlauf erfolgenden Prüfung, ob die Pufferspeicher (TDBUF, RDBUF) des Sendeabschnitts (40) und des Empfangsabschnitts (41) stets in synchroner und zyklischer Weise verwendet werden, umfaßt:
- einen Schritt der Verifikation durch den Empfangsabschnitt (41), daß die Kennung oder Nummer des Sendepufferspeichers (TDBUF) der laufenden Nachricht der Kennung oder Nummer des zugeordneten Empfangspufferspeichers (RDBUF) entspricht, d. h., daß der Ausgangszeiger des Sendepufferspeichers (TDBUF) dem Eingangszeiger des Empfangspufferspeichers (RDBUF) entspricht,
- einen Schritt der Erzeugung einer Marke, die angibt, daß ein Empfangspufferspeicher (RDBUF) geleert worden ist und daß dieser letztere von nun an frei ist,
- einen Schritt der Prüfung, ob die bei den Leerungen von Empfangspufferspeichern (RDBUF) erzeugten Marken in zyklischer Weise erzeugt werden.

5. Verfahren zur Fehlererfassung nach Anspruch 4, **dadurch gekennzeichnet, daß** es umfaßt:
- einen Schritt der Verifikation, daß der Empfangspufferspeicher (RDBUF), der dazu bestimmt ist, die laufende Nachricht zu empfangen, frei ist, wobei eine Nachricht nur dann zum Empfangsabschnitt (41) gesendet wird, wenn der erforderliche Platz dort verfügbar ist.

6. Verfahren zur Fehlererfassung nach Anspruch 4 oder 5, **dadurch gekennzeichnet, daß** bei der Initialisierung der seriellen Verbindung alle Empfangspufferspeicher (RDBUF) geleert werden und die Eingangs- und Ausgangszeiger der Sendepufferspeicher (TDBUF) und der Empfangspufferspeicher (RDBUF) auf null liegen.

7. Verfahren zur Fehlererfassung nach einem der vorhergehenden Ansprüche, **dadurch gekennzeichnet, daß** die gesendeten Informationen 9/12-codiert werden, indem einem aus einem Nonett gebildeten normalen Zeichen ein Code, dessen Gleichgewicht in bezug auf die Nullkomponente so gewählt ist, daß es bestrebt ist, das kumulierte Ungleichgewicht nach null zu ziehen, und ein Bit zur direkten/inversen Codierung zugeordnet werden und indem durch ein Startzeichen und ein Stoppzeichen auf 12 Bits aufgefüllt wird.

8. Verfahren zur Fehlererfassung nach Anspruch 2, **dadurch gekennzeichnet, daß** der Bereich, auf den das jeweilige kumulierte Ungleichgewicht der Codes des Stroms von Nachrichten beschränkt bleiben soll, [+10; -10] ist.

9. Vorrichtung zur Erfassung von Fehlern in einer integrierten Schaltung für die Ausführung des Verfahrens nach einem der vorhergehenden Ansprüche, wobei die integrierte Schaltung eine Funktion der Steuerung der seriellen Verbindung umfaßt, um einen Seriell-Parallel-Kommunikationsport mit hohem Durchsatz zwischen einem parallelen Bus (L2CB, C2LB) und einer seriellen Verbindung zu bilden, wobei der Port (10°) in einem Sendeabschnitt (40) wenigstens einen Pufferspeicher (TDBUF) für Daten, die zu senden sind und von dem parallelen Bus stammen, sowie Mittel (109T) zur Serialisierung am Ausgang und in einem Empfangsabschnitt (41) wenigstens einen Pufferspeicher (RDBUF) für zu empfangende Daten sowie Mittel (109R) zur Deserialisierung am Eingang und Mittel (106R) für die Steuerung der Daten der Nachrichten durch Berechnen des Codes zur zyklischen Redundanzprüfung (CRC) in allen Daten jeder zu sendenden Nachricht umfaßt, wobei der Sendeabschnitt (40) und der Empfangsabschnitt (41) dieselbe Anzahl von Pufferspeichern besitzen, **dadurch gekennzeichnet, daß** der Sendeabschnitt (40) Mittel zum Einfügen jeder Nachricht oder jeder Datengesamtheit in einen Rahmen von Steuerzeichen, die Informationen über die betreffenden Nachrichten transportieren, und Mittel (108T) für die Codierung der Zeichen umfaßt, wobei der Empfangsabschnitt (41) Mittel für die Isolation der Zeichen der Nachrichten durch Befreien der Nachrichten von den Steuerzeichen und Mittel (1023R), die die Nachrichten vollständig verifizieren, bevor diese in den oder die Empfangspufferspeicher (RDBUF) geschrieben werden, umfaßt, wobei die Pufferspeicher (TDBUF, RDBUF) in synchroner und zyklischer Weise verwendet werden, wobei die Vorrichtung Mittel (1023R) für die fortlaufende Prüfung der Kohärenz der Nachrichten auf der Ebene ihrer Codierung in Bits, Mittel (1023R) für die fortlaufende Prüfung der Kohärenz des Stroms von die Nachrichten bildenden Zeichen sowie Mittel (1023R) für die fortlaufende Prüfung, daß die Pufferspeicher des Sendeabschnitts (40) (TDBUF) und des Empfangsabschnitts (41) (RDBUF) in synchroner und zyklischer Weise verwendet werden, umfaßt.

10. Vorrichtung zur Fehlererfassung nach Anspruch 9, **dadurch gekennzeichnet, daß** die Mittel (108T) für die Codierung der Zeichen eine Codierung in Bits der Zeichen der Nachrichten in der Weise sicherstellen, daß eine Nullkomponente erhalten wird, und jedem Zeichen ein Anfangsbit und ein Endbit verleihen, wobei die Mittel (1023R) für die fortlaufende Prüfung der Kohärenz der Nachrichten auf der Ebene ihrer Codierung in Bits prüfen, ob jedes Zeichen mit einem Anfangsbit beginnt und mit einem Endbit endet und ob das jeweilige kumulierte Ungleichgewicht der Codes des Stroms von Nachrichten auf einen bestimmten Bereich beschränkt bleibt.

11. Vorrichtung zur Fehlererfassung nach Anspruch 9 oder 10, **dadurch gekennzeichnet, daß** die Nachrichten oder Daten aus sogenannten "normalen" Zeichen gebildet sind; wobei die Steuerzeichen umfassen: Null-Zeichen oder neutrale Nachrichten, Rahmenanfangszeichen, die Informationen über das Format der in den betreffenden Rahmen enthaltenden Nachrichten wie etwa die Länge und/oder den Typ der Nachricht enthalten, Rahmenendezeichen, die Informationen über die Gültigkeit der in den betreffenden Rahmen enthaltenen Nachrichten und über die Identität des Quellpufferspeichers (TDBUF) der Nachrichten enthalten, wobei die Steuerzeichen außerdem Stromsteuerzeichen enthalten, die jeweils einem entsprechenden Empfangspufferspeicher (RDBUF) zugeordnet und dazu bestimmt sind, die Verfügbarkeit des betreffenden Pufferspeichers anzugeben, wobei der Schritt der im Durchlauf erfolgenden Prüfung der Kohärenz des Stroms von die Nachrichten bildenden Zeichen die störungsbedingten Transformationen von normalen Zeichen in Steuerzeichen und umgekehrt erfassen, wobei die Transformationen von normalen Zeichen in andere normale Zeichen durch die CRC erfaßt werden.

12. Vorrichtung zur Fehlererfassung nach Anspruch 11, **dadurch gekennzeichnet, daß** die Mittel (1023R) für die Prüfung, ob die Pufferspeicher (TDBUF, RDBUF) des Sendeabschnitts (40) und des Empfangsabschnitts in synchroner und zyklischer Weise verwendet werden, Mittel zur Verifikation, daß die Kennung oder Nummer des Sendepufferspeichers (TDBUF) der laufenden Nachricht der Kennung oder Nummer des zugeordneten Empfangspufferspeichers (RDBUF) entspricht, Mittel zur Erzeugung einer Marke, die angibt, daß ein Empfangspufferspeicher (RDBUF) geleert worden ist und daß dieser letztere von nun an frei ist, sowie Mittel für die Prüfung, ob die bei der Leerung der Empfangspufferspeicher (RDBUF) erzeugten Marken in zyklischer Weise erzeugt werden, umfassen.

13. Vorrichtung zur Fehlererfassung nach Anspruch 12, **dadurch gekennzeichnet, daß** sie Mittel umfaßt, die verifizieren, daß der Empfangspufferspeicher (RDBUF), der dazu bestimmt ist, die laufende Nachricht zu empfangen, frei ist, wobei eine Nachricht zum Empfangsabschnitt (41) nur dann gesendet wird, wenn der erforderliche Platz dort verfügbar ist.

14. Vorrichtung zur Fehlererfassung nach Anspruch 12 oder 13, **dadurch gekennzeichnet, daß** er Mittel, die die Anzahl der freien Empfangspufferspeicher (RDBUF) zählen, und Mittel für ihre Identifikation umfaßt.

15. Vorrichtung zur Fehlererfassung nach einem der Ansprüche 12 bis 14, **dadurch gekennzeichnet, daß** sie Mittel umfaßt, die die Leerung der Empfangspufferspeicher (RDBUF) sicherstellen und die Eingangs- und Ausgangszeiger der Sendepufferspeicher (TDBUF) bzw. der Empfangspufferspeicher (RDBUF) bei der Initialisierung der seriellen Verbindung auf null setzen.

16. Erfassungsvorrichtung nach einem der Ansprüche 9 bis 15, **dadurch gekennzeichnet, daß** sie zwei Pufferspeicher (TDBUF) für zu sendende Daten und zwei Pufferspeicher (RDBUF) für zu empfangende Daten umfaßt.

17. Erfassungsvorrichtung nach Anspruch 9, **dadurch gekennzeichnet, daß** die serielle Verbindung in einer kontinuierlichen Betriebsart arbeitet, wobei Null-Zeichen oder neutrale Nachrichten in dem kontinuierlichen Strom zwischen den Zeichen oder Nachrichten, die eine Bedeutung haben, angeordnet sind.

18. Erfassungsvorrichtung nach einem der Ansprüche 9 bis 17, **dadurch gekennzeichnet, daß** die Nachrichten Anforderungen oder Antworten auf Anforderungen sind.

## Claims

1. Method for detecting errors on an integrated circuit constituting a highspeed serial/parallel communication port between a parallel bus (L2CB, C2LB) and a serial link, the port (10°) comprising, in a transmission portion (40), at least one buffer (TDBUF) for data to be transmitted that come from the parallel bus and, in a reception portion (41), at least one buffer (RDBUF) for data to be received, the transmission portion (40) inserting each message or set of data into a frame of check characters conveying information on the messages concerned, the transmission portion (40) coding the characters of the messages at bit level, the reception portion (41) making a complete check of the messages, the buffers (TDBUF, RDBUF) of the transmission (40) and reception (41) portions being identical in number, **characterised in that** the buffers (TDBUF, RDBUF) of the transmission (40) and reception (41) portions are used in a synchronous, cyclic manner, said complete check in the reception portion (41) being performed before writing of the message to the reception buffer(s) (RDBUF), the reception portion comprising means for isolating the characters of the messages by removing the check characters from the messages, the method comprising:
a step of on-the-fly consistency checking of the messages as concerns their coding in bits,
a step of on-the-fly consistency checking of the character stream constituting the messages,
a step of on-the-fly checking that the buffers of the transmission (40) (TDBUF) and reception (41) (RDBUF) portions are used in a synchronous and cyclic manner,
a step of on-the-fly checking of the data in the messages by calculating the cyclic redundancy check code (CRC) for all the data of each message to be transmitted.

2. Error-detection method, according to Claim 1, **characterised in that** the transmission portion (40) codes the characters of the messages so as to attempt to have a zero direct component and by giving each character a start bit and a stop bit, the step of on-the-fly consistency checking of the messages as concerns their coding in bits being performed by the reception portion (41) and comprising:
a step of checking that each character begins with a start bit and ends with a stop bit,
a step of checking that the current cumulated imbalance of the codes of the message stream remains confined within a given range of values.

3. Error-detection method, according to Claim 1 or 2, **characterised in that** the messages or data are constituted by characters said to be normal, check characters comprising blank characters or neutral messages, frame-start characters containing information on the format of the messages contained within the frames concerned, such as the length and/or type of the message, frame-end characters containing information on the validity of the messages contained within the frames concemed and on the identity of the source buffer (TDBUF) of the message and flow-control characters each associated with a respective reception buffer (RDBUF) and intended to indicate the availability of the buffer concerned, the step of on-the-fly consistency checking of the character stream. constituting the messages detecting transformations, following disturbances, of normal characters into check characters and vice versa, the transformations of normal characters into other normal characters being detected by the CRC, or later on by a current cumulated imbalance error.

4. Error-detection method, according to Claim 3, **characterised in that** the step of on-the-fly checking that the buffers (TDBUF, RDBUF) of the transmission (40) and reception (41) portions are always used in a synchronous and cyclic manner comprises:
a step of checking by the reception portion (41) that the identification or number of the transmission buffer (TDBUF) for the current message corresponds to the identification or number of the associated reception buffer (RDBUF), i.e. that the output pointer of the transmission buffer (TDBUF) corresponds to the input pointer of the reception buffer (RDBUF),
a step of generating a token indicating that a reception buffer (RDBUF) has been emptied and that the latter is now free,
a step of checking that the tokens generated when the reception buffers (RDBUF) are released are generated cyclically.

5. Error-detection method, according to Claim 4, **characterised in that** it comprises
a step of checking that the reception buffer (RDBUF) intended to receive the current message is free, a message being sent to the reception portion (41) only if the necessary space is available there.

6. Error-detection method, according to Claims 4 or 5, **characterised in that** on initialisation of the serial link all the reception buffers (RDBUF) are empty and the input and output pointers of the transmission (TDBUF) and reception (RDBUF) buffers are set to zero.

7. Error-detection method, according to any one of the preceding claims, **characterised in that** the information transmitted is coded in 9/12 mode by associating the normal character formed of a nine-bit byte with the code for which the balance with respect to the direct component is selected so as to make the cumulated imbalance tend towards zero, a direct/inverse coding bit and by making up to 12 bits with a start character and a stop character.

8. Error-detection method, according to Claim 2, **characterised in that** the range within which the current cumulated imbalance of the codes of the message stream must remain confined is [+10; -10].

9. Device for detecting errors on an integrated circuit for implementing the method according to any one of the preceding claims, the integrated circuit having a serial link control function in order to constitute a highspeed serial/parallel communication port between a parallel bus (L2CB, C2LB) and a serial link, the port (10°) comprising, in a transmission portion (40), at least one buffer (TDBUF) for data to be transmitted that come from the parallel bus and output serialisation means (109T) and, in a reception portion (41), at least one buffer (RDBUF) for data to be received and input deserialisation means (109R) and means (106R) for checking the data of the messages by calculating the cyclic redundancy check code (CRC) on all the data of each message to be transmitted, the transmission (40) and reception (41) portions having the same number of buffers, **characterised in that** the transmission portion (40) comprises means for inserting each message or set of data into a frame of check characters conveying information on the messages concerned, means (108T) for coding the characters, the reception portion (41) comprising means for isolating the characters of the messages by removing the check characters from the messages and means (1023R) for complete checking of the messages before writing the latter to the reception buffer(s) (RDBUF), the buffers (TDBUF, RDBUF) being used in a synchronous and cyclic manner, the device comprising on-the-fly consistency checking means (1023R) for the messages as concerns their coding in bits, on-the-fly consistency checking means (1023R) for the character stream constituting the messages, and on-the-fly means (1023R) for checking that the buffers of the transmission (40) (TDBUF) and reception (41) (RDBUF) portions are used in a synchronous and cyclic manner.

10. Error-detection device according to Claim 9 **characterised in that** the means (108T) for coding the characters ensure coding in bits of the characters of the messages so as to have a zero direct component and give each character a start bit and a stop bit, the means (1023R) for on-the-fly consistency checking of the messages as concerns their coding in bits checking that each character starts with a start bit and ends with a stop bit and that the current cumulated imbalance of the codes of the message stream remains confined within a given range.

11. Error-detection device according to Claim 9 or 10 **characterised in that** the messages or data are constituted by characters said to be "normal"; the check characters comprising blank characters or neutral messages, frame-start characters containing information on the format of the messages contained within the frames concerned, such as the length and/or type of the message, frame-end characters containing information on the validity of the messages contained within the frames concerned and on the identity of the source buffer (TDBUF) of the messages, the check characters also comprising flow-control characters each associated with a respective reception buffer (RDBUF) and intended to indicate the availability of the buffer concerned, the step of on-the-fly consistency checking of the character stream constituting the messages detecting transformations, following disturbances, of normal characters into check character and vice versa, the transformations of normal characters into other normal characters being detected by the CRC.

12. Error-detection device according to Claim 11 **characterised in that** the means (1023R) for checking that the buffers (TDBUF, RDBUF) of the transmission (40) and reception (41) portions, which are used in a synchronous and cyclic manner, comprise means for checking that the identification or number of the transmission buffer (TDBUF) for the current message corresponds to the identification or number of the associated reception buffer (RDBUF), means for generating a token indicating that a reception buffer (RDBUF) has been emptied and that the latter is now free, and means for checking that the tokens generated when the reception buffers (RDBUF) are released are generated cyclically.

13. Error-detection device according to Claim 12 **characterised in that** it comprises means for checking that the reception buffer (RDBUF) intended to receive the current message is free, a message being sent to the reception portion (41) only if the necessary space is available there.

14. Error-detection device according to Claim 12 or 13 **characterised in that** it comprises means for counting the number of free reception buffers (RDBUF), and means for identifying them.

15. Error-detection device according to any one of Claims 12 to 14 **characterised in that** it comprises means ensuring the emptying of the reception buffers (RDBUF) and setting to zero the input and output pointers of the transmission (TDBUF) and reception (RDBUF) buffers on initialisation of the serial link.

16. Detection device according to any one of Claims 9 to 15, **characterised in that** it has two buffers (TDBUF) for data to be transmitted and two buffers (RDBUF) for data to be received.

17. Detection device according to Claim 9, **characterised in that** the serial link functions in direct mode, blank characters or neutral messages being arranged in the continuous stream between characters or messages having some significance.

18. Detection device according to any one of Claims 9 to 17, **characterised in that** the messages are requests or responses to requests.
